# EUROPEAN PATENT APPLICATION

(11) **EP 3 696 659 A1**
(43) Date of publication of application: **19.08.2020**
(21) Application number: 18892083.9
(22) Date of filing: 17.12.2018
(51) Int. Cl.: G06F 3/06

(54) **SUPPORTED CONTENT FILTERING METHOD FOR HYBRID STORAGE SYSTEM**

(30) Priority: 19.12.2017 CN 201711375346
(71) Applicant: Institute of Acoustics,Chinese Academy of Sciences, Haidian District Beijing 100190 (CN); Beijing Hili Technology Co. Ltd., Beijing 100190 (CN)
(72) Inventor: WANG, Jinlin, Beijing 100190 (CN); DING, Li, Beijing 100190 (CN); WANG, Lingfang, Beijing 100190 (CN); ZHU, Xiaodong, Beijing 100190 (CN)
(74) Representative: Hoarton, Lloyd Douglas Charles
(86) International application number: PCT/CN2018/121491
(87) International publication number: WO 2019/120165

(57) **Abstract**

The present invention relates to a supported lightweight content filtering method for a hybrid storage system. The method comprises: using an LRU queue and a Hash table to filter content, the access frequency of which is lower than a specified threshold (T), the time complexity being 0(1). In the present invention, an LRU queue and a Hash table are used to support a quick content filtering method applicable to a hybrid storage system to filter content, the number of times same is accessed being lower than a specified threshold, and to use scarce storage resources to cache hot content that will be frequently accessed, thus improving a cache hit ratio.

## Description

### ▪ Related Application

This application claims priority of Chinese patent application No. 201711375346.X filed on December 19, 2017, entitled "Content Filtering Method Supporting Hybrid Storage System", which is hereby incorporated by reference.

### ▪ Field of the Invention

The present invention relates to the technical field of information centric networking, and in particular, to a lightweight content filtering method supporting a hybrid storage system.

### ▪ Background of the Invention

In the field of information centric networking (ICN), a single storage medium often cannot meet the requirements of high-speed forwarding and terabyte (TB) level caching at the same time. For example, a dynamic random access memory (DRAM) currently meeting O (10Gbps) can only provide O (10GB) storage space, while a solid state drive (SSD) that can provide TB level storage space cannot meet the requirement of O (10 Gbps) line speed.

In addition, a typical load request characteristic at present is that most of content may be accessed only once in a long period time. For example, analysis on the URL access log of Wikipedia on September 20, 2007 shows that 63% of the content was requested only once. Further, although hybrid storage provides more storage space, it still seems insignificant as compared with the huge content space in the network. Storing the content that may be accessed only once wastes valuable storage space, and furthermore, the cache hit rate cannot be improved. At the same time, processing of the less requested content may also increase the processing pressure of an ICN router.

### ▪ Summary of the Invention

An objective of the present invention is to filter content the number of access times of which is below a specified threshold, and use scarce storage resources to cache hot content that may be frequently accessed, thus improving the cache hit rate.

To achieve the aforementioned objective, in an aspect, the present invention provides a lightweight content filtering method supporting a hybrid storage system, specifically including: determining, by a hybrid storage system, a first message; calculating a corresponding hash value according to the first message; and determining information of the first message according to the hash value and a least recently used (LRU) queue.

In an optional implementation, the aforementioned "first message" may include: an interest message and a content message.

In another optional implementation, when the aforementioned "first message" is an interest message, the aforementioned "calculating, by the hybrid storage system, a corresponding hash value according to the first message" may include: calculating, by the hybrid storage system a corresponding first hash value Hᵢₙₛₑᵣₜ according to the interest message.

In yet another optional implementation, the aforementioned "determining, by the hybrid storage system, information of the first message according to the hash value and a least recently used (LRU) queue" includes:
when the hybrid storage system determines that the LRU queue is full, replacing a second hash value H_{replace} of an element indexed by tail in the LRU queue with the Hᵢₙₛₑᵣₜ; decreasing, by the hybrid storage system, the number of request times recorded in a hash table by one according to the H_{replace}, the hash table being used for recording the number of content requests; and increasing, by the hybrid storage system, the number of request times recorded by the hash table by one according to the Hᵢₙₛₑᵣₜ, and determining the head of the LRU queue according to the tail element.

In still yet another optional implementation, the aforementioned "increasing the number of request times recorded by the hash table by one according to the Hᵢₙₛₑᵣₜ, and determining the head of the LRU queue according to the tail element" may include:
traversing, by the hybrid storage system, buckets of the hash table according to the Hᵢₙₛₑᵣₜ to determine a matched first entry.

In still yet another optional implementation, the aforementioned "traversing buckets of the hash table according to the Hᵢₙₛₑᵣₜ to determine a matched first entry" may include:
reading a first field in the first entry; if the first field is 1, determining whether a hash value recorded in the first entry is equal to a matched one through comparison; if so, returning the hash value recorded in the first entry; and if not, matching a second entry of the buckets of the hash table.

In still yet another optional implementation, when the aforementioned "first message" is a content message, the aforementioned "calculating, by the hybrid storage system, a corresponding hash value according to the first message" may include:
calculating, by the hybrid storage system, a corresponding third hash value Hₗₒₒₖᵤₚ according to the content message.

In still yet another optional implementation, the aforementioned "determining, by the hybrid storage system, information of the first message according to the hash value and a least recently used (LRU) queue" may include:
traversing, by the hybrid storage system, buckets of the hash table according to the Hₗₒₒₖᵤₚ to determine a matched third entry; and comparing, by the hybrid storage system, the number of request times in the third entry with a preset threshold to determine information of the first message.

In still yet another optional implementation, the aforementioned "comparing, by the hybrid storage system, the number of request times in the third entry with a preset threshold to determine information of the first message" may include:
if the number of request times in the third entry is greater than or equal to the preset threshold, caching the content message in the hybrid storage system, and then forwarding the content message from an ingress port of the interest message; and if the number of request times in the third entry is less than the preset threshold, forwarding the content message from the ingress port of the interest message.

In still yet another optional implementation, each element in the aforementioned "LRU queue" includes one or more of: an index of the previous element, an index of the next element, and the hash value.

In another aspect, the present invention provides a supported hybrid storage system, specifically including a receiving module configured to determine a first message; and a processing module configured to calculate a corresponding hash value according to the first message. The processing module is further configured to determining, by the hybrid storage system, information of the first message according to the hash value and a least recently used (LRU) queue.

In an optional implementation, the aforementioned "first message" may include: an interest message and a content message.

In another optional implementation, when the first message is an interest message, the aforementioned "processing module" may be specifically configured to replace a second hash value H_{replace} of an element indexed by tail in the LRU queue with the Hᵢₙₛₑᵣₜ if the LRU queue determined to be full; decrease the number of request times recorded in a hash table by one according to the H_{replace}, the hash table being used for recording the number of content requests; and increase the number of request times recorded by the hash table by one according to the Hᵢₙₛₑᵣₜ, and determine the head of the LRU queue according to the tail element.

In yet another optional implementation, the aforementioned "processing module" may be specifically configured to traverse buckets of the hash table according to the Hᵢₙₛₑᵣₜ to determine a matched first entry.

In still yet another optional implementation, the aforementioned "processing module" may be specifically configured to read a first field in the first entry; if the first field is 1, determine whether a hash value recorded in the first entry is equal to a matched one through comparison; if so, return the hash value recorded in the first entry; and if not, match a second entry of the buckets of the hash table.

In still yet another optional implementation, when the first message is a content message, the aforementioned "processing module" may be specifically configured to calculate a corresponding third hash value Hₗₒₒₖᵤₚ according to the content message.

In still yet another optional implementation, the aforementioned "processing module" may be specifically configured to traverse buckets of the hash table according to the Hookup to determine a matched third entry; and compare the number of request times in the third entry with a preset threshold to determine information of the first message.

In still yet another optional implementation, the aforementioned "processing module" may be specifically configured to: if the number of request times in the third entry is greater than or equal to the preset threshold, cache the content message in the hybrid storage system, and then forward the content message from an ingress port of the interest message; and if the number of request times in the third entry is less than the preset threshold, forward the content message from the ingress port of the interest message.

In still yet another optional implementation, each element in the aforementioned "LRU queue" includes one or more of: an index of the previous element, an index of the next element, and the hash value.

The present invention provides a lightweight content filtering method supporting a hybrid storage system, to filter content the number of access times of which is below a specified threshold, decrease the number of SSD writes, and improve a cache hit rate of the hybrid storage system. The hybrid storage system can meet the requirements of high capacity and high line speed. Physical characteristics of the SSD determine its limited number of writes. Therefore, decreasing the number of SSD writes can effectively increase the life of the SSD and improve the stability of the hybrid storage system. In addition, as the time complexity of insert and delete operations of the least recently used (LRU) queue is O(1), the size of each bucket of the Hash table is aligned with a CPU cache line, which may guarantee that the entire bucket can be placed in the CPU cache by one read operation, and thus the traversal of the hash table only requires one memory access operation, thus greatly reducing latency caused by memory reads.

### ▪ Brief Description of the Drawings

Fig. 1 is a flow diagram of a content filtering method supporting a hybrid storage system provided in an embodiment of the present invention;
Fig. 2 is an operation diagram of a hybrid storage system provided in an embodiment of the present invention;
Fig. 3 is a processing flow diagram of an interest message received by an ICN router provided in an embodiment of the present invention;
Fig. 4 is a processing flow diagram of a content message received by an ICN router provided in an embodiment of the present invention; and
Fig. 5 is a structure diagram of a content filtering device supporting a hybrid storage system provided in an embodiment of the present invention.

### ▪ Detailed Description of the Embodiments

Technical solutions of the present invention are further described in detail below in conjunction with the accompanying drawings and embodiments.

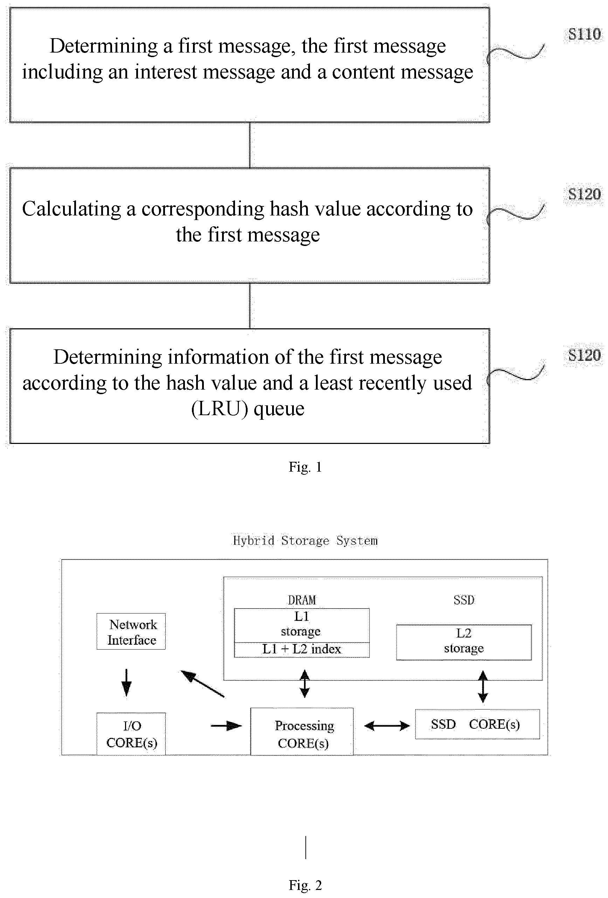

Fig. 1 is a flow diagram of a content filtering method supporting a hybrid storage system provided in an embodiment of the present invention. As shown in Fig. 1, an LRU queue and a hash table are used in the present invention to filter content with low access frequency. Specific steps may be as follows:
S110: determining, by a hybrid storage system, a first message;
   wherein specifically, the first message includes: an interest message and a content message;
S120: calculating, by the hybrid storage system, a corresponding hash value according to the first message;
   specifically, when the first message is an interest message, calculating, by the hybrid storage system a corresponding first hash value Hᵢₙₛₑᵣₜ according to the interest message; and
   when the first message is a content message, calculating, by the hybrid storage system, a corresponding third hash value Hₗₒₒₖᵤₚ according to the content message; and
S130: determining, by the hybrid storage system, information of the first message according to the hash value and a least recently used (LRU) queue;
   specifically, if the first message is an interest message, when the hybrid storage system determines that the LRU queue is full, replacing a hash value, which is denoted as H_{replace}, of an element indexed by tail in the LRU queue with the Hᵢₙₛₑᵣₜ; and at the same time, transversing buckets of the hash table according to the H_{replace} to find a matched first entry, and decreasing the number of request times recorded in the first entry by one, wherein a hash table is used for recording the number of content requests; transversing buckets of the hash table according to the Hᵢₙₛₑᵣₜ to find a matched entry, and increasing the corresponding number of request times by one, and at the same time, setting the index of the element as the head of the LRU;
   wherein transversing buckets of the hash table according to the Hᵢₙₛₑᵣₜ to find a matched first entry may include: reading, by the hybrid storage system, a first field in the first entry; if the first field is 1, determining whether a hash value recorded in the first entry is equal to a matched one through comparison; if so, returning the hash value recorded in the first entry; and if not, matching a second entry of the buckets of the hash table; and
   when the first message is a content message, traversing, by the hybrid storage system, buckets of the hash table according to the Hₗₒₒₖᵤₚ to determine a matched third entry; and comparing, by the hybrid storage system, the number of request times in the third entry with a preset threshold to determine information of the first message;
   wherein comparing, by the hybrid storage system, the number of request times in the third entry with a preset threshold to determine information of the first message includes: if the number of request times in the third entry is greater than or equal to the preset threshold, caching the content message in the hybrid storage system, and then forwarding the content message from an ingress port of the interest message; and if the number of request times in the third entry is less than the preset threshold, forwarding the content message from the ingress port of the interest message.

Each element in the LRU queue includes one or more of: an index of the previous element, an index of the next element, and the hash value.

The aforementioned hybrid storage system may be a storage system composed of a DRAM and an SSD. The LRU queue is used for recording interest message information. The hash table is used to record the number of content requests. Specifically, the size of each Entry in the hash table is 8 bytes, wherein 1 byte indicates whether the Entry is occupied, 1 byte is reserved, 2 bytes are used to record the number of request times for a content object, and 4 bytes are used to record a hash value of the requested content object.

Fig. 2 is a working schematic diagram of a hybrid storage system provided in an embodiment of the present invention. As shown in Fig. 2, assuming that a switch uses an Ethernet message, an EtherType corresponding to a content centric network (CCN) in the Ethernet message is 0x0011, and 1 byte following the EtherType indicates a type field (Type) of the data packet, wherein a Type field 0x01 represents an interest packet, and a Type field 0x02 represents a content message. The hybrid storage system, as shown in Fig. 2, is composed of a DRAM and an SSD. When the interest message is not hit in the DRAM and the SSD, it is forwarded to its upstream port. If it is hit, the system responds with a content message; when the content message returns from an upstream path thereof, if the number of request times for the content message is greater than a specified threshold, the content message is inserted into the DRAM, and when the DRAM is full, replaced content blocks in the DRAM are cached in the SSD.

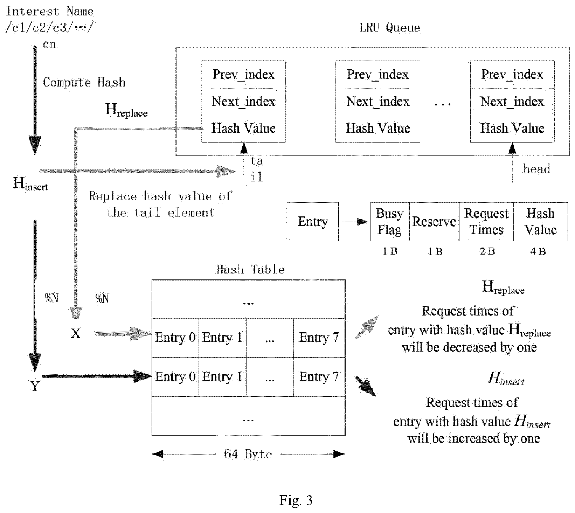

Fig. 3 is a processing flow diagram of a interest message received by an ICN router provided in an embodiment of the present invention. As shown in Fig. 3, assuming that the ICN router receives an interest packet with an EtherType of 0x0011 and a Type of 0x01, as shown in Fig. 2, the ICN router extracts the name of a content object requested by the interest packet, calculates its hash value, which is denoted by Hinsert, and stores the Hinsert in the head of the LRU queue. Assuming that a bucket size of the Hash is N, a corresponding bucket is found according to Hinsert% N, and the corresponding number of request times is increased by one. If the LRU queue is full, the tail element will be replaced. Assuming that the Hash value of the replaced element is Hreplace, a corresponding bucket is found according to Hreplace% N, and the corresponding number of request times is decreased by one. Then the subsequent processing flow of the interest message is executed.

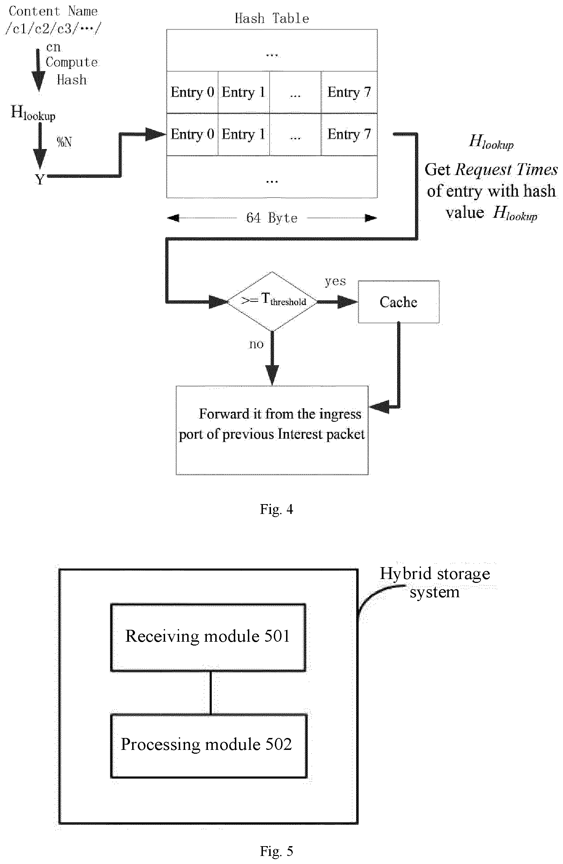

Fig. 4 is a processing flow diagram of a content message received by an ICN router provided in an embodiment of the present invention. As shown in Fig. 4, assuming that after a period of time, the ICN router receives a content packet with an EtherType of 0x0011 and a Type of 0x02, as shown in Fig. 4, the ICN router extracts the name of a content object requested by the interest packet, calculates its Hash value, which is denoted by Hlookup, finds a corresponding bucket according to Hlookup% N, and compares the corresponding number of request times with a preset threshold T. If the number of request times is greater than T, the content message will be cached; otherwise the subsequent processing flow of the content message will be executed.

Fig. 5 is a structure diagram of a content filtering device supporting a hybrid storage system provided in an embodiment of the present invention. As shown in Fig. 5, a receiving module 501 is configured to determine a first message. A processing module 502 is configured to calculate a corresponding hash value according to the first message. The processing module is further configured to determining, by the hybrid storage system, information of the first message according to the hash value and a least recently used (LRU) queue.

The first message may include: an interest message and a content message.

When the first message is an interest message, the processing module may be specifically configured to replace a second hash value Hreplace of an element indexed by tail in the LRU queue with the Hinser if the LRU queue determined to be full; decrease the number of request times recorded in a hash table by one according to the Hreplace, the hash table being used for recording the number of content requests; and increase the number of request times recorded by the hash table by one according to the Hinsert, and determine the head of the LRU queue according to the tail element.

The processing module may be specifically configured to traverse buckets of the hash table according to the Hinsert to determine a matched first entry.

The processing module may be specifically configured to read a first field in the first entry; if the first field is 1, determine whether a hash value recorded in the first entry is equal to a matched one through comparison; if so, return the hash value recorded in the first entry; and if not, match a second entry of the buckets of the hash table.

When the first message is a content message, the processing module may be specifically configured to calculate a corresponding third hash value Hlookup according to the content message.

The processing module may be specifically configured to traverse buckets of the hash table according to the Hlookup to determine a matched third entry; and compare the number of request times in the third entry with a preset threshold to determine information of the first message.

The processing module may be specifically configured to: if the number of request times in the third entry is greater than or equal to the preset threshold, cache the content message in the hybrid storage system, and then forward the content message from an ingress port of the interest message; and if the number of request times in the third entry is less than the preset threshold, forward the content message from the ingress port of the interest message.

Each element in the LRU queue includes one or more of: an index of the previous element, an index of the next element, and the hash value.

The present invention provides a lightweight content filtering method supporting a hybrid storage system, to filter content the number of access times of which is below a specified threshold, decrease the number of SSD writes, and improve a cache hit rate of the hybrid storage system. The hybrid storage system can meet the requirements of high capacity and high line speed. Physical characteristics of the SSD determine its limited number of writes. Therefore, decreasing the number of SSD writes can effectively increase the life of the SSD and improve the stability of the hybrid storage system. In addition, as the time complexity of insert and delete operations of the least recently used (LRU) queue is 0(1), the size of each bucket of the Hash table is aligned with a CPU cache line, which may guarantee that the entire bucket can be placed in the CPU cache by one read operation, and thus the traversal of the hash table only requires one memory access operation, thus greatly reducing latency caused by memory reads.

Those of ordinary skill in the art can further appreciate that the units and algorithm steps of the examples described in conjunction with the embodiments disclosed herein can be implemented in electronic hardware, computer software, or a combination thereof. To clearly illustrate the interchangeability of hardware and software, the composition and steps of each example are described generally in terms of functions in the above description. Whether these functions are performed in hardware or software depends on the specific application and design constraints of the technical solution. Those of ordinary skill in the art may use different methods to implement the described functions for each specific application, but such implementation should not be considered to go beyond the scope of the present application.

The steps of the method or algorithm described in conjunction with the embodiments disclosed herein may be implemented by hardware, a software module executed by a processor, or a combination thereof. The software module may be placed in a random access memory (RAM), an internal memory, a read-only memory (ROM), an electrically programmable (ROM), an electrically erasable programmable (ROM), a register, a hard disk, a removable disk, a CD-ROM, or a storage medium in any other form known in the technical field.

The foregoing specific embodiments further describe the objectives, technical solutions and beneficial effects of the present invention in detail. It should be understood that described above are only specific embodiments of the present invention, which are not intended to limit the protection scope of the present invention, and all modifications, equivalent substitutions, and improvements made within the spirit and principle of the present invention shall be encompassed within the protection scope of the present invention.

## Claims

1. A content filtering method, comprising the following steps:
determining, by a hybrid storage system, a first message;
calculating, by the hybrid storage system, a corresponding hash value according to the first message; and
determining, by the hybrid storage system, information of the first message according to the hash value and a least recently used (LRU) queue.

2. The method according to claim 1, wherein the first message comprises: an interest message and a content message.

3. The method according to claim 2, wherein when the first message is an interest message, calculating, by the hybrid storage system, a corresponding hash value according to the first message comprises:
calculating, by the hybrid storage system, a corresponding first hash value Hᵢₙₛₑᵣₜ according to the interest message.

4. The method according to claim 3, wherein determining, by the hybrid storage system, information of the first message according to the hash value and LRU queue comprises:
when the hybrid storage system determines that the LRU queue is full, replacing a second hash value H_{replace} of an element indexed by tail in the LRU queue with the Hᵢₙₛₑᵣₜ;
decreasing, by the hybrid storage system, the number of request times recorded in a hash table by one according to the H_{replace}, the hash table being used for recording the number of content requests; and
increasing, by the hybrid storage system, the number of request times recorded by the hash table by one according to the Hᵢₙₛₑᵣₜ, and determining the head of the LRU queue according to the tail element.

5. The method according to claim 4, wherein increasing the number of request times recorded by the hash table by one according to the Hᵢₙₛₑᵣₜ, and determining the head of the LRU queue according to the tail element comprises:
traversing, by the hybrid storage system, buckets of the hash table according to the Hᵢₙₛₑᵣₜ to determine a matched first entry.

6. The method according to claim 5, wherein traversing buckets of the hash table according to the Hᵢₙₛₑᵣₜ to determine a matched first entry comprises:
reading, by the hybrid storage system, a first field in the first entry;
if the first field is 1, determining whether a hash value recorded in the first entry is equal to a matched one through comparison;
if so, returning the hash value recorded in the first entry; and if not, matching a second entry of the buckets of the hash table.

7. The method according to claim 2, wherein when the first message is a content message, calculating, by the hybrid storage system, a corresponding hash value according to the first message comprises:
calculating, by the hybrid storage system, a corresponding third hash value Hₗₒₒₖᵤₚ according to the content message.

8. The method according to claim 7, wherein determining, by the hybrid storage system, information of the first message according to the hash value and LRU queue comprises:
traversing, by the hybrid storage system, buckets of the hash table according to the Hₗₒₒₖᵤₚ to determine a matched third entry;
comparing, by the hybrid storage system, the number of request times in the third entry with a preset threshold to determine information of the first message.

9. The method according to claim 8, wherein comparing, by the hybrid storage system, the number of request times in the third entry with a preset threshold to determine information of the first message comprises:
if the number of request times in the third entry is greater than or equal to the preset threshold, caching the content message in the hybrid storage system, and then forwarding the content message from an ingress port of the interest message; and
if the number of request times in the third entry is less than the preset threshold, forwarding the content message from the ingress port of the interest message.

10. The method according to claim 1-9, wherein each element in the LRU queue comprises: an index of the previous element, an index of the next element, and one or more of the hash values.
